# EUROPEAN PATENT APPLICATION

(11) **EP 3 975 024 A1**
(43) Date of publication of application: **30.03.2022**
(21) Application number: 21196752.6
(22) Date of filing: 15.09.2021
(51) Int. Cl.: G06F 21/60, G06F 21/62, G06F 21/10

(54) **SYSTEM AND METHOD OF GRANTING A USER DATA PROCESSOR ACCESS TO A CONTAINER OF USER DATA**

(30) Priority: 24.09.2020 RU 2020131457; 01.06.2021 US 202117335144
(71) Applicant: AO Kaspersky Lab, Moscow 125212 (RU)
(72) Inventor: KOZLOV, Sergey V., 125212 MOSCOW (RU); EFREMOV, Andrey A., 125212 MOSCOW (RU); SHMOYLOV, Dmitry V., 125212 MOSCOW (RU); FILONOV, Pavel V., 125212 MOSCOW (RU); IVANOV, Dmitry G., 125212 MOSCOW (RU)
(74) Representative: Chimini, Francesco

(57) **Abstract**

Disclosed herein are systems and methods for granting a user data processor access to a cryptocontainer of user data. In one example, an exemplary method comprises, creating a cryptocontainer for user's data, wherein the cryptocontainer receives at least one element of the user's data and encrypts the element; for the user data processor, establishing rights for accessing the element using a first key, and forming at least one access structure, the forming including, placing the first key in the access structure based on the established rights, receiving, from the user data processor, a second key linked to the user data processor which is to be used for accessing the first key, and encrypting the first key with the second key; and when a request for access to the cryptocontainer is received, granting, to the user data processor, access to the cyptocontainer based on the formed at least one access structure.

## Description

### FIELD OF TECHNOLOGY

The present disclosure relates to the field of data security, and specifically, to systems and method for protecting the confidentiality of user data and ensuring privacy while granting access to a container of user data.

### BACKGROUND

The volume of data collected from users' devices is increasing year by year. There is also a growth in the variety and number of the devices from which data are collected. The devices now include "Internet of Things" (IoTs) as well as personal computers, notebooks, and smartphones. Data are commonly collected from devices without any clear consent by the user; but even if such consent is given, the user does not always understand all the consequences of his/her decision. Data collected from devices is subsequently distributed around the network in an uncontrolled way, and may cause harm to the user. For example, a user may become a victim of criminals who have obtained his/her telephone number or credit card. Moreover, it is not only malicious parties that cause problems; unscrupulous employers may use data from users' devices to track their employees. Another result of uncontrolled data collection is the user of the device may receive annoying advertisements for merchandize that are targeted to the user based on categories of the merchandize.

There are some mechanisms by device manufacturers that attempt to defend the user from concealed data collection and to regulate data operations. One example is Google's Firebase system, which synchronizes data between different applications on Android devices and grants access to these data to a third party. In Apple, there is a similar platform, called the Apple Security Framework, used to protect information, to establish a trusted connection, and to control access to software on a device. The platform is used to establish a user's identity, to ensure the security of data both in a store and in transfer over the network, and to confirm the validity of a code. These mechanisms allow data from devices to be shared with third parties. However, these mechanisms are not transparent to the user, are irreversible, and only provide weak protection against tracking by third-party applications.

Therefore, there is a need for a method and a system for collecting data from users' devices while providing an effective way of protection the collected data from being improperly disseminated and misused.

### SUMMARY

Aspects of the disclosure relate to data security, more specifically, to systems and methods of granting a user data processor access to a container of user datacollected from a user's devices. For example, the user data may be first stored in a cryptocontainer for being accessed by processors, e.g., by processors of storage devices.

In one example, a method is provided for granting a user data processor access to a cryptocontainer of user data, the method comprising: creating a cryptocontainer for user's data, wherein the cryptocontainer receives at least one element of the user's data and encrypts the at least one element; establishing, for the user data processor, rights for accessing the at least one element of the user's data using a first key; forming, for the user data processor, at least one access structure, wherein the forming of the at least one access structure includes: placing the first key in the at least one access structure based on the established rights, receiving, from the user data processor, a second key linked to the user data processor which is to be used for accessing the first key, and encrypting the first key with the second key; and when a request for access to the cryptocontainer is received, granting, to the user data processor, access to the cyptocontainer based on the formed at least one access structure.

In one example, the cryptocontainer encrypts the at least one element using the first key.

In one example, the second key is a combination of at least a pair of keys comprising at least one private key and at least one public key.

In one example, the at least one public key is received for encrypting the first key.

In one example, information about the second key is transferred to the user data processor.

In one example, the at least one public key is received from the user data processor to which access is granted.

In one example, each element of the at least one element of the user's data is encrypting using a respective separate first key.

In one example, the rights for accessing the at least one element are established based on a set of actions that the user data processor is permitted to perform on the at least one element of the user data.

In one example, the set of actions includes at least one of: reading data, and writing data.

In one example, a separate first key is created for each action of the set of actions.

In one example, the created first key comprises a combination of at least a pair of keys, the pair of keys including at least one private first key and at least one public first key.

In one example, the pair of keys is formed from the private first key and the public first key such that the private first key is used for encrypting data when writing takes place and the public first key is used for decrypting the data when reading takes place.

In one example, the first public key is placed in the at least one access structure when rights for reading data from a field are established.

In one example, the first private key is placed in the at least one access structure when rights for writing data into a field are established.

In one example, the method further comprises: during the creation of the cryptocontainer for user's data, adding an access structure for a data access rights manager, wherein at least one first key for the added access structure of the data access rights manager is placed in the access structure of the user data processor, and wherein the at least one first key is encrypted.

In one example, the placing, in the access structure of the user data processor, the at least one first key for the added access structure of the data access rights manager includes extracting the first key from the access structure of the data access rights manager.

In one example, the method further comprises: requesting, on behalf of the user data processor, rights for accessing elements of the user's data in the created cryptocontainer.

In another example, a system is provided for granting a user data processor access to a cryptocontainer of user data, the system comprising a hardware processor configured to: create a cryptocontainer for user's data, wherein the cryptocontainer receives at least one element of the user's data and encrypts the at least one element; establish, for the user data processor, rights for accessing the at least one element of the user's data using a first key; form, for the user data processor, at least one access structure, wherein the forming of the at least one access structure includes: placing the first key in the at least one access structure based on the established rights, receiving, from the user data processor, a second key linked to the user data processor which is to be used for accessing the first key, and encrypting the first key with the second key; and when a request for access to the cryptocontainer is received, grant, to the user data processor, access to the cyptocontainer based on the formed at least one access structure.

The method and system of the present disclosure are designed to provide data security, in a more optimal and effective manner of protecting the data while also granting access to a container of user data. The first technical result is an improvement in the level of protection of user data thereby providing security to the user.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1** illustrates a system for exchanging of data from a user's devices.
**Fig. 2** illustrates a method of granting access to a user's data to a user data processor.
**Fig. 2a** illustrates an example of a method for providing a user's data to user data processor during a transfer of data structure from the user's device to a remote storage device.
**Fig. 2b** illustrates an example of a method for providing a user's data to user data processor in the transfer of a data structure from a storage device to a user data processor.
**Fig. 3** illustrates a method for renewing a user's data in a storage device.
**Fig. 3a** illustrates an example of a method for updating a user's data in a transfer of a data structure to a remote storage device.
**Fig. 3b** illustrates an example of a method for updating a user's data in a transfer of an updated data structure to a storage device.
**Fig. 4** illustrates an example of a configuration of data permissions.
**Fig. 5** illustrates an exemplary system for exchanging a user's data, designed for granting access to the user's data via a cryptocontainer.
**Fig. 6** illustrates examples of containers.
**Fig. 7** illustrates an example of a method for forming a new container.
**Fig. 8** illustrates an example of a method for granting a user data processor access to a previously formed container.
**Fig. 9** illustrates an example of a system for exchanging a user's data, designed for granting access to a patient's medical history via a container.
**Fig. 10** illustrates a method for granting a user data processor access to a cryptocontainer of user data.
**Fig. 11** presents an example of a general purpose computer system on which examples of the present disclosure can be implemented.

### DETAILED DESCRIPTION

Exemplary aspects are described herein in the context of a system, method, and a computer program granting a user data processor access to a cryptocontainer of user data in accordance with aspects of the present disclosure. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

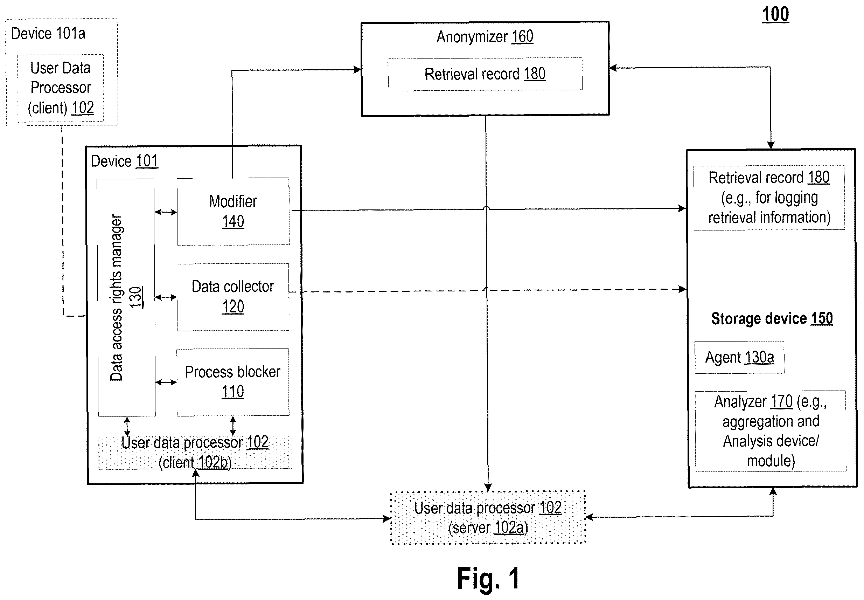

**Fig. 1** illustrates a system **100** for exchanging of data from a user's devices. The system **100** is designed for the transparent and secure processing of the data of users of devices **101.** In the context of the present disclosure, "data of a user of devices" refers to data from devices in the user's environment, created on a device by various types of software, and including both data input by the user and data created in the operation of programs and applications, for example a stream of clicks (clickstream), communications in messaging services, location data, and data collected from smart home IoT devices or other IoT devices in the user's ecosystem, such as a private car.

In one example, the system **100** consists of:
- a user's device **101,** with process blocker **110,** data collector **120,** data access rights manager **130** (access rights manager **130**), and modifier **140;**
- user data processor **102;**
- storage device **150,** with an aggregation and analyzer **170** and a retrieval record **180** (a record log for data retrievals); and
- anonymizer **160,** with a retrieval record **180.**

The process blocker **110** is designed to block the processing of data (including personal data) on the user's device by the user data processor **102.** Blocking can be carried out on any user data processor **102,** including third-party devices and those belonging to the platform by which the device is controlled (for example, Apple, Google, Huawei or Xiaomi software and services) on which the process blocker is installed, or which are accessible to the process blocker. For example, the process blocker **110** may be installed on a router through which the user's personal devices **101a** and IoT devices communicate with the internet, and the process blocker **110** analyzes the network traffic flowing through ithe router. In one example, the process blocker **110** blocks the collection of only critical data, not the collection of any data. Critical data includes data about which the law or the authorized party imposes restrictions on collection, storage, access, distribution and/or processing. The critical data is usually sensitive to disclosure, distribution, or leakage, since the occurrence of these events results in the infringement of the rights and legally protected interests of parties. Furthermore, the distribution or leakage of such data creates liability for parties who have permitted the infringement of the rules for collection, storage, access, and processing specified for these data.

In one example, the critical data is that of confidential data ("sensitive data"). It is noted that in the context of this disclosure, confidential data and confidential information are synonymous. Confidential data are taken to include data stored in accordance with the law of the country whose jurisdiction covers the user of the device that constitutes the client in the system described.

In one example, confidential data include personal data (PD) and data containing:
- commercial secrets;
- tax secrets;
- banking secrets;
- medical secrets;
- notarial secrets;
- legal secrets;
- auditing secrets;
- communications secrets;
- insurance secrets;
- testamentary secrets;
- adoption secrets;
- confessional secrets;
- investigation secrets;
- judicial secrets;
- information about protected persons; and
- government secrets.

In another example, the processing of a user's data for marketing purposes is blocked. In another example, the processing of any of a user's data by the user data processor **102** is blocked, where the data are not concerned with the direct functionality of applications or programs using these user data processor. In another example, the blocking includes any processing by user data processor **102** not included on the list of permitted (trusted) devices or data processors. The blocking of data processing may be carried out by various methods, including direct and indirect methods. The direct blocking includes blocking where the actions themselves associated with the data processing are blocked. Indirect refers to the scenario in which the data processing is not directly impeded, but the processing does not achieve its objectives even though it is executed. Direct blocking methods may include the prohibition of access to a user's data by the user data processor. Indirect processing methods include, in particular, the breaking of the associative link between the data to be sent from the user's devices, for example, by removing cookie files or spoofing the user's identifiers set up by tracking networks on a device.

The data access rights manager **130** is designed to manage access to data. The data access rights manager **130** defines the rights of the user data processor **102** to access data, withdraws rights from user data processor, and draws up lists of permitted (trusted) user data processor **102.** The data access rights manager **130** stores or establishes the structure format (data model) for the user's data specified for allocation on the storage device **150.** The data access rights manager **130** may be configured by external updatable policies or by user policies or directly by the user's input. The data access rights manager **130** also updates the user's data model specified for sending to the storage device **150** (operating scenarios will be described below). Those skilled in relevant art may find examples of user's data model in previous literature on data organization, such as GOST 20886-85: Data organization in data processing systems, Terms and definitions.

The data collector **120** is intended to collect user data specified for transfer to the storage device **150** from the user's devices. The data collector **120** populates the fields of the data structure received from the data access rights manager **130.** The data collector **120** then transfers the populated data structure to the modifier **140.** In one example, the data collector **120** sends the populated data structure to the storage device **150** directly. Usually, the blocking by the process blocker **110** and the collection of data by the data collector **120** take place independently of the data requirements of the user data processor **102.** For example, according to the configurations, the process blocker **110** blocks web tracking, and the data collector **120** collects all the data whose processing was blocked in advance (before the attempted processing by the user data processor **102**) on the device **101** by the process blocker **110;** the collected data are then housed in the storage device **150.**

The device **101** comprises a modifier **140** designed to analyze the data in the fields of the structure received from the data collector **120,** in order to determine the composition of the data, divide the data structure into substructures, and select the route for sending data to the remote storage device **150** for the resulting substructures. The modifier **140** determines the necessity of dividing the structure into substructures according to the fields of the structure. There may be various criteria for the division of the data structure into substructures, one of these criteria being the presence of personal data ("Personal Identification Information" (PII)) or special categories thereof (according to GDPR terminology, for example), in the presence of which the data structure is divided in such a way that one substructure contains personal data (hereafter PD, or PII) or special categories thereof, while the other substructure contains data that are not personal. The relationship of the data to personal data is determined, for example, by the law of the country whose jurisdiction covers the user of the device that constitutes the client in the system described (in other words, according to the location of the data source). Another, more general, criterion is the presence of critical data. In one example, the modifier **140** is intended to convert the data structures on the device before sending the data to the storage device **150.**

In one example, the methods for converting the data substructures are:
- quantization;
- sorting;
- merging (pasting);
- grouping;
- configuring the data set;
- tabular substitution of values;
- calculated values;
- data encoding;
- encryption;
- convolution; and
- normalization (scaling).

Some kinds of conversion may be used not only for individual data (fields) in a substructure, but also for a substructure as a whole, for example, by tokenization and/or encryption. In one example, the conversion takes place without the possibility of reverse conversion by any means other than the modifier **140** and/or the storage device **150.** "Conversion" is taken to mean a projection (function) of a quantity on itself or projections that translate a given quantity into another quantity.

A particular case of a user data processor may be a client **102b** (for example, an application) that collects the user's data on the device **101** at the request of a server **102a** connected to the application in the context of a client-server interaction. "Data processing" is taken to mean any action (operation) or combination of actions (operations) carried out with the use of data automation means (user data processor), including the collection, recording, arrangement, accumulation, storage, adjustment (updating, changing), extraction, use, transfer (distribution, provision, access), depersonalization, blocking, removal and deletion of data.

In one example, the modifier **140** selects a network route along which the structure or substructure will be sent to the storage device **150.** This route may include an anonymizer **160.** The anonymizer **160** is designed to convert the structures and substructures passing through it by both direct and reverse conversion (examples are considered below). The anonymizer **160** is not located in a same local network or intranet (the network of a single organization, for example) to which the device **101** belongs. In one example, the anonymizer **160** is not located in a local network or intranet to which thethe storage device **150** belongs. The retrieval record **180** is connected to the anonymizer **160** and to the storage device **150.**

The retrieval record **180** is intended to track operations with the user's data and to record all acts of retrieval (or transfer) of the user's data from the storage device **150.** Based on the log which is kept by said retrieval record **180,** it is always possible to check whether or not the use of the user's data by third parties is in accordance with the access rights (i.e., whether or not legitimate use). For example, suppose the history of the user's search queries was transferred to the network N without the right of transfer to third parties, as recorded by the retrieval record **180.** Suppose, subsequencly, the user receives advertising offers from the network M on the basis of his search queries. The determination may be based on advertising offers recorded by additional means of the system **100** (not shown in **Fig. 1**), and/or based on data from the device and from the retrieval record **180.** The system **100** of the present disclosure records the incident. This incident may be processed subsequently, depending on the supplementary add-ons of the system **100.** For example, the supplementary means of the system **100** may draw up a complaint to network N, send a demand for removal of data to network M, send information to a regulator, etc.

The storage device **150** is designed for storing user data, i.e., it is the location of user data. The storage device **150** may transfer the user's data to the user data processor **102,** while allowing the data to be processed without transfer, directly in the storage device **150.** The storage device **150** is connected to analyzer **170** which is designed for automated data aggregation and analysis and for constructing, based on the analysis, various analytical results and aggregates. The various analytical results and aggregates are also placed in the storage device **150** and may be transferred to external user data processor **102** if the latter have rights to this. The analyzer **170** also links the data from various devices **101** of a single user/household. The storage device **150** is also connected to a data access rights manager (through an agent **130a,** for example), since the storage device **130** determines the rights of data access, by the user data processor **102,** to the user's data. The storage device **150** may be located in the device **101,** in the local network of the device **101,** or remotely, as shown in **Fig. 1****.**

In one example, the storage device receives the user's data, including data from user data processor **102.** For example, it receives data from the user data processor **102** of social networks, online and offline retail stores, advertising networks, data exchanges, and others.

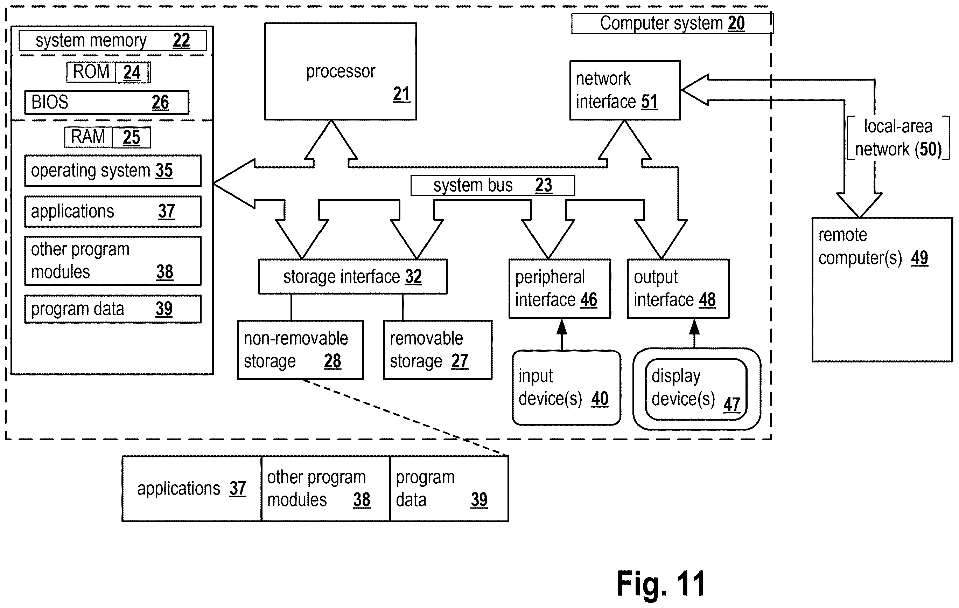

In the present disclosure, the process blocker **110,** data collector **120,** data access rights manager **130,** modifier **140,** storage device **150,** anonymizer **160,** analyzer **170,** and retrieval record **180** denote real devices, systems, components and groups of components constructed with the use of hardware such as integrated microcircuits ("application-specific integrated circuit", or ASIC) or programmable gate arrays ("field-programmable gate array", or FPGA), or, for example, in the form of a combination of software and hardware such as a microprocessor system and a set of program instructions, and also on neuromorphic chips (in English, "neurosynaptic chips"). The functionality of said means may be implemented solely by hardware, or additionally in the form of a combination in which some of the functionality is implemented by software and some by hardware. In some examples, the various means for granting a user data processor access to a cryptocontainer of user data may be implemented on the processor of a general-purpose computer (as shown in **Fig. 11****,** for example). Databases may be implemented by any feasible methods and may be contained on a single physical medium or on various media located either locally or remotely.

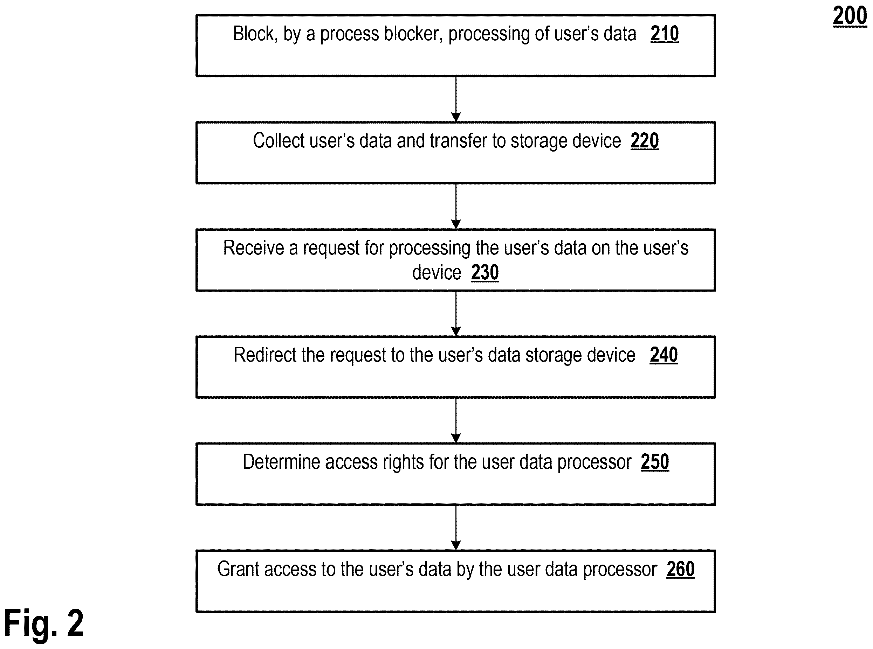

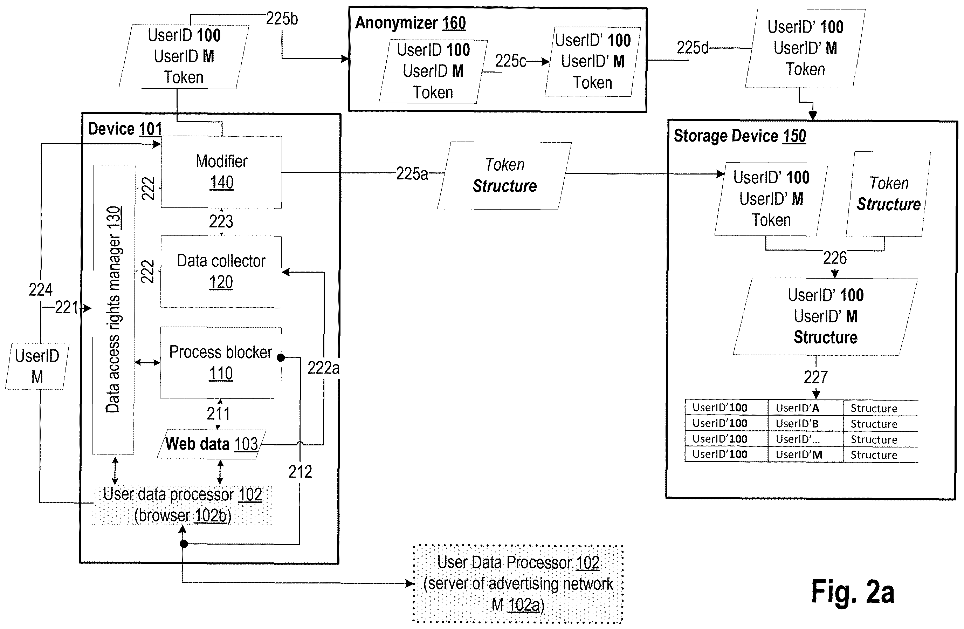

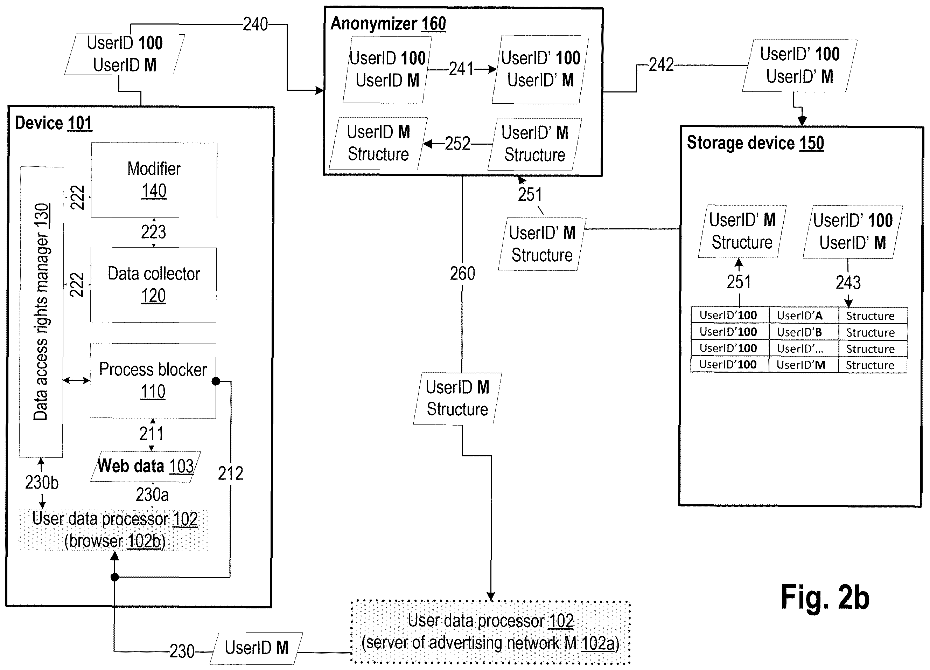

**Fig. 2** illustrates a method **200** of granting access to a user's data to a user data processor. The system **100** described above may be used for executing the method **200.**

In step **210,** the process blocker **110,** blocks the processing of the user's data at the user's devices for the user data processor. Various methods of processing user data are blocked for various user data processors.

In one example, the following methods of processing user data are blocked:
- mobile and web tracking, for example, by:
   ▪ tracing and removing trackers from devices,
   ▪ using a VPN service enabling trackers and advertisements to be cut out of the network traffic;
- collecting geolocation information, for example, by:
   ▪ using virtual operators,
   ▪ spoofing ("spoofing" in English) geolocation,
   ▪ switching off GPS, Wi-Fi and Bluetooth modules when they are not being used by the user;
- collecting search queries, for example, by:
   ▪ using private search systems (for example, DuckDuckGo),
   ▪ proxying outgoing search queries,
   ▪ spoofing ("spoofing" in English) the identifiers of search systems in outgoing traffic,
   ▪ removing the identifiers of search systems in outgoing traffic; and
- collecting registration data, for example using:
   ▪ anonymous telephone numbers and mailboxes,
   ▪ anonymous one-time maps.

In step **220,** the user's data is collected by the data collector **120** and transferred to the storage device **150.** In one example, the user's data that is collected comprises the data blocked for processing by external user data processor **102** according to the current policies. The policies are applied by the data access rights manager **130** and implemented via the data model/structure described above. In one example, the transferring of the collected data to the storage device **150** is performed through the modifier **140** and/or the anonymizer **160.**

In one example, access to these data by user data processor **102** which are not, for example, on the list of permitted user data processors, or for which the data are not necessary for providing their basic functionality, may only be received from the storage device **150.**

In step **230,** the system **100** receives a request for processing the user's data on the device **101.** This request may be received by various means of the system **100,** depending on the method of implementation. For example, if there is an attempt to process the user's data on the device, this is detected by the process blocker **110** (implicit request). For an explicit request, permission for processing this request will be received by the data access rights manager **130.**

In one example, if the processing request is received by the process blocker **110,** this request is redirected to the data access rights manager **130.** If the user data processor from which the request is received is known to the system **100** (e.g., if rights have already been allocated to this means), the method proceeds to step **240.**

In step **240,** the request is redirected to the user's data storage device **150.**

In one example, when the user data processor **102** is not known to the system, access rights are determined for the user data processor **102.** Then, the method proceeds to step **240** to enable the user data processor **102** to process the user's data without redirecting the request to the storage device **150.** In other words, when the user data processor **102** is on the listed of trusted means, or access to these data takes place in the context of basic functionality accepted by the user, or in other cases mentioned above, the user data processor **102** is permitted to process the user's data without redirecting it to the storage device **150.**

In step **250,** the storage device **150** determines the access rights of the user data processor **102** to the user's data, for which purpose the storage device may use their copy of the access rights base for the user data processor **102,** drawn up by the data access rights manager **130,** or may contact the data access rights manager **130** directly, through the agent **130a,** for example. After the determination of rights, in step **260,** access to the user's data is granted to the user data processor in accordance with the determined rights.

In one example, access is granted through the anonymizer **160,** which executes the reverse conversion of the user's data located in the storage device **150.** Information about this is recorded by the retrieval record **180.** In one example, the recording is based on blockchain technology. In one example, the technology for supplying data for processing from the user to the user data processor **102** may be implemented as a smart contract, in which the incoming offer from the owner of the user data processor **102,** in a particular case, is the cashless use of an application/program functionality (user's data in exchange for the functionality). In this example, after access to the processing of the user's data has been received, the user who has granted access to his data may use the functionality of a certain application or service, or he/she will be able to access any other product or service, optionally encrypted (for example, an insurance discount in a case where remote metering from a car is provided).

**Fig. 2a** illustrates an example of a method for providing a user's data to a user data processor. For example, this example may be used during a transfer of data from the user's device to a remote storage device. The process blocker **110** blocks the processing of data for an advertising network M. The blocking takes place by removing from web data **103,** including data created by a browser **102b,** cookie files containing an advertising identifier, in step **211,** and spoofing the user's identifier in the advertising network M in network traffic, in step **212.** This impedes the operation of the user data processor **102,** which in the present case, is used for user profiling (by profiling means, not shown). Thus, the advertising network will not be able to carry out targeting since it does not have the user profile, resulting in a marked reduction in conversion (the number of clicks on an advertising announcement), and since the operating model of the advertising network is CPC ("cost per click"), there is a corresponding decline in revenue per user, ARPU (average revenue per user). Similar blocking is used by the user, since the user wishes to avoid the appearance of advertising for certain categories X of goods in his browser (for example, medicines, medical clinics and other items in the "health" category). However, the user is prepared to receive targeted advertising for other categories of goods and services from said advertising network M. Thus, after the specified settings, in step **221,** the data access rights manager **130** defines the rights for the network M to the history of search queries and the clickstream, excluding search queries and clicks relating to category X. In step **222,** the relevant information is sent out to the system **100.** In particular, the data collector **120** receives the data structure with fields for population, the modifier **140** receives categories of data whose transfer is prohibited, and the storage device receives the access rights for the advertising network M.

In particular cases, various scenarios are then possible, for example:
- the data collector **120** collects all the search queries and clicks from the user's devices **101,** all the data are sent to the storage device **150,** and the storage device **150** independently generates (or in a particular case completes) the structure for processing by the user data processor **102** of the advertising network M in accordance with the data access rights, having excluded the clicks and search queries from category X;
- the data collector **120** collects all the search queries and clicks from the user's devices **102,** all the data are sent to the modifier **140,** and the modifier **140** removes substructures relating to category X and moves the modified structure to the storage device **150,** and in this form, it will be transferred to the user data processor **102** of the advertising network M;
- the data collector **120** collects the search queries and clicks not relating to category X and moves the structure to the storage device **150,** and in this form, it will be transferred to the user data processor **102** of the advertising network M; and
- the data collector **120** collects the search queries from all categories and the clicks not relating to category X, and the structure is transferred to the modifier **140,** the modifier **140** removes search queries relating to category X from the received structure and transfers the modified structure to the storage device **150,** and in this form, it will be transferred to the user data processor **102** of the advertising network M (the example in **Fig. 2a****,** which will be considered subsequently, relates to this scenario).

As a general rule, such scenarios apply not only to clicks and search queries, but also to other types of user's data, where this is possible, and the user data processor **102** do not only relate to advertising networks, and the user may have more than one device. In one example, when the storage device **150** is located in a remote unit, as in **Fig. 2a****,** the modified structure from the modifier is not sent directly to the storage device **150.**

An example according to the last scenario is considered further below. In step **221,** the rights for the user data processor **102** of network M have been defined by the data access rights manager **130.** In step **222,** the data access rights manager **130** transfers the format of the structure to the data collector **120** for the population of the fields. The structure comprises at least a "search queries" field and a "clickstream" field, and in turn the clickstream field comprises a field of categories of web resources in which a field for category X is absent.

In step **222a,** the data collector **120** populates the fields. The data for population, in one example, are selected from the retained web data **103** accumulated in the course of the user's network activity. These data are formulated both by the browser 102a and by additional means of the system **100,** such as plug-ins in the browser or UI interceptors (these are not shown in **Fig. 2a****,** and in a particular case are modules of the data collector **120**).

In step **223,** the data collector **120** transfers the populated structure to the modifier **140,** which in turn, based on the structure format received in step **222** from the data access rights manager **130,** analyzes the fields of the search queries for the presence of queries relating to category X. Then, the query data is removed.

In step **224,** the modifier **140** receives from the user data processor **102** the user identifier in the advertising network M (UserIDM) (for example, from the cookie file or from a profile in the browser) and the user identifier in the system **100** (UserID100) from the data access rights manager **130** (not shown in **Fig. 2a**).

The structure with the user's data is then encrypted with a public key, and a pair of identical random tokens is generated. One of the tokens is linked to the identifiers, while the second token is linked to the user's data structure (for example, it is added in an additional field to the structure, this step not being shown in **Fig. 2a**).

In step **225a,** the user's data structure is then sent to the storage device **150,** and the identifiers with the second token are sent to the anonymizer **160** in step **225b.** In step **225c,** the anonymizer **160** converts the identifiers, and in step **225d,** the converted identifiers UserID'100 and UserID'M are transferred to the storage device **150.**

In step **226,** by the storage device **150,** the identifiers are linked with the user's data structure based on finding identical tokens. In step **227,** the storage device **150** links the received data structure with other data structures for this user.

The anonymizer **160** changes the original user identifier in the system **100** and the identifier for the advertising network M, in order to protect the user's data in case of a data leak from the storage device **150,** since the data owner cannot be recognized with the changed identifiers. The data requests from the advertising network M for the processing of the data are redirected to the storage device **150** through the anonymizer **160,** as shown in **Fig. 2b****.**

**Fig. 2b** illustrates an example of a method for providing a user's data to user data processor, e.g., in the transfer of a data structure from a storage device to a user data processor. As can be seen in **Fig. 2b****,** the request can be directed by the server through the client in step **230,** or by the client itself in accordance with its functionality, in step **230a** and/or in step **230b.**

In one example, the request comprises a user identifier in the advertising network M, UserIDM. In step **240,** the request is redirected to the anonymizer **160.** When the request is redirected, the user identifier in the system **100** is attached to the request, and, in a particular case, information about the requested data, for example the enumeration of the fields of the structure is added; there may be various formats such as XML, JSON, etc.

In step **241,** the anonymizer **160** converts the user identifier in the system **100** and the identifier in the advertising network M, and it transfers the converted identifiers to the storage device in step **242.**

The storage device **150** detects, in step **243,** the data linked to the user, on the basis of UserID'100, and determines the rights for the advertising network M, in step **250** (not shown in **Fig. 2b**), and the storage device **150** prepares the data for processing by the user data processor **102** in accordance with the access rights. In the present example, this takes place by means of the detection of UserID'M and the data structure related thereto.

In step **251,** when the data is detected, it is returned, together with the UserID'M, to the anonymizer **160.** In step **252,** the anonymizer **160** returns the original value to the user identifier in the network M. The user's data, together with the original UserIDM, is transferred to the user data processor **102** of the advertising network, while the occurrence of the transfer is recorded by the retrieval record **180.**

In one example, the advertising network may contact the anonymizer **160** directly without the redirection of requests by the device **101,** while in the present case the user data processor **102** itself redirects the request: instead of the device **101** it contacts the storage device **150,** in a particular case through the anonymizer **160.**

In another example, the data is not transferred to the user data processor **102,** but access to a copy of the data placed in the storage device **150** is granted.

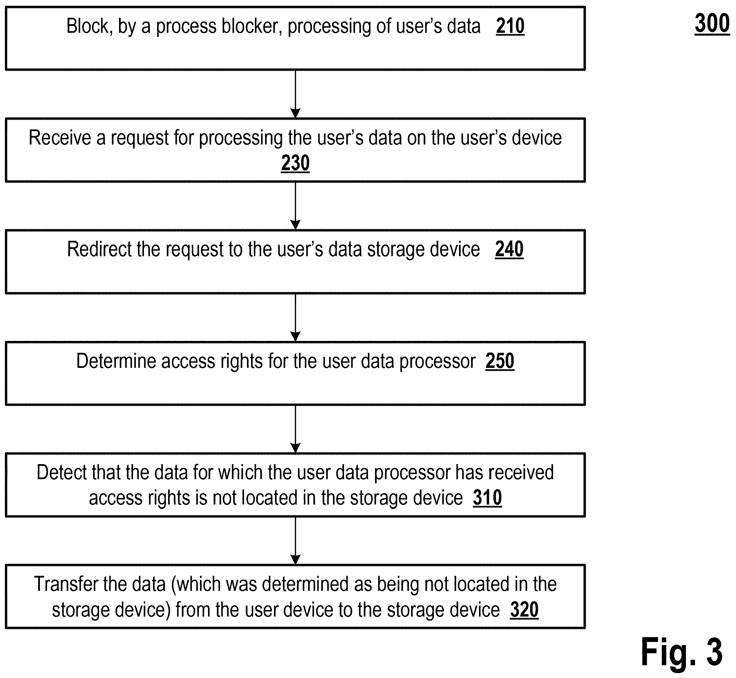

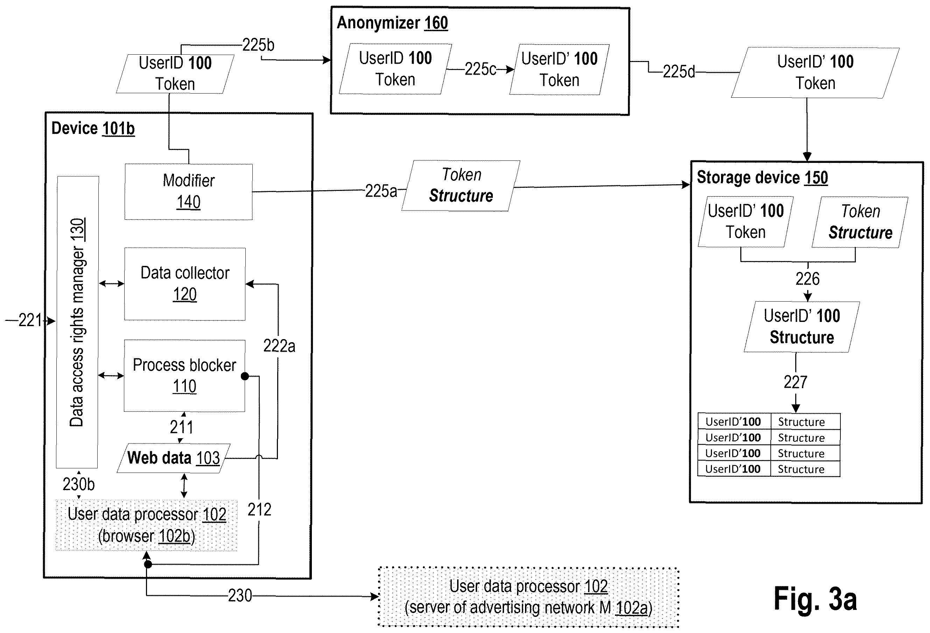

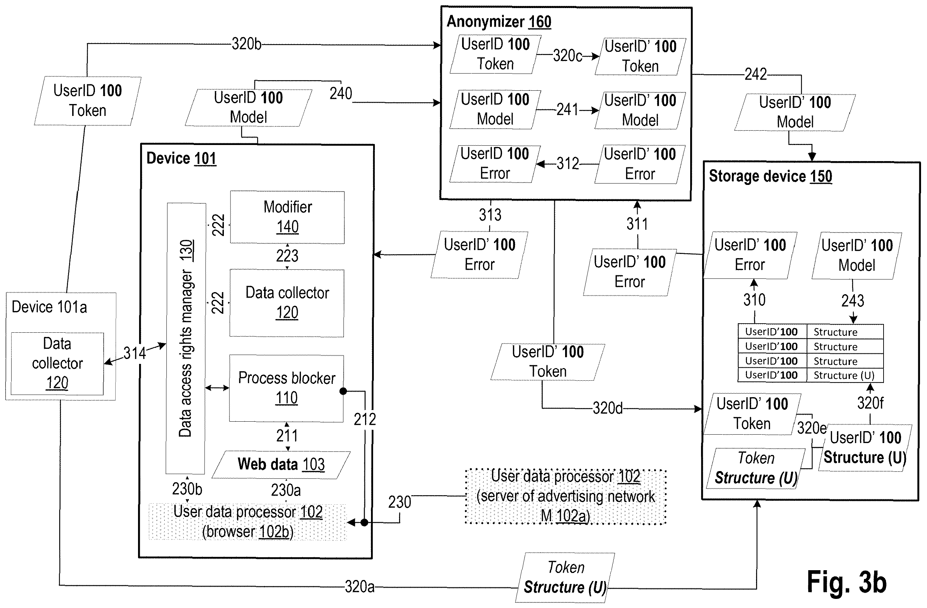

The system shown in **Fig. 1** is also used for implementing the method **300** of updating the user's data, as shown in **Fig. 3****.** This method is implemented when not all the data for processing are placed in the storage device **150** and/or when the user has more than one device from which data may be received.

In the present method, steps **210, 230, 240** and **250** are similar to the steps of the method shown in **Fig. 2****.** The method **300** then proceeds from step **250** to step **310.**

In step **310,** the storage device **150** detects that the data for which the user data processor have received access rights is not located in the storage device **150.**

In step **320,** therefore, the user's data missing from the storage device **150** is transferred from the user device to the storage device **150.** In one example, when the absence of the data in the storage device is detected, the storage device **150** contacts the data access rights manager **130.**

The data access rights manager **130** updates the data model, in accordance with which the data collector **120** populates new fields in the structure (in the present example, those relating to the location). The data access rights manager **130** then sends the data to the storage device **150.**

In one example, the data are sent with the use of the modifier **140** and the anonymizer **160,** if the detected data requires further conversion. The modifier **140** carries out an analysis of the data for criticality and other conformity with the rights established by the data access rights manager **130.**

**Fig. 3** illustrates a method **300** for renewing a user's data in a storage device. **Fig. 3a** illustrates an example of the method for updating a user's data in a transfer of a data structure to a remote storage device. An example with the advertising network M will be considered further.

In the present case, however, the system **100** operates according to the following scenario:
- web tracking is blocked in advance (steps **211, 212**) in the device **101b** (a PC, in the present example),
- the data collector **120** collect all the user's search queries and clicks in step **222a** (as the most widespread data for processing),
- the collected data are sent to the storage device **150** (steps **225a - 227**), and the storage device **150** then independently creates the structure for processing by the user data processor in accordance with their access rights.

In addition to information on search queries and clicks, the advertising network M in the present example has requested information on the location: in step **230,** the server **102a** sent a request to the client **102b,** which sent it to the data access rights manager **130** in step **230b.** The user issued this permission, in step **221,** and the data access rights manager **130** drew up rights, including rights to location data.

**Fig. 3b** illustrates an example of the method **300** for updating a user's data in a transfer of an updated data structure to a storage device. Since the storage device **150** independently creates or populates data structures for processing by the user data processor **102.**

In step **240,** when the request is redirected through the user identifier UserID100, information about the data to which rights have been defined for the advertising network M is added to the request. The information about the data is added in the form of fields of the data structure. In **Fig. 3b****,** this is denoted "Model", for example.

In step **242,** the storage device **150** receives the converted user identifier UserID' 100 and the fields of the data structure from the anonymizer **160,** and, in step **243,** it finds the user's user's data in the store.

The storage device **150** then determines the access rights to the data, for which, in our example, the storage device **150** compares the fields of the structure (taken from the "Model") attached to the request with the data located in the storage device. Then, in step **310,** it detects (not shown in **Fig. 3b**) that the information about the user's location UserID'100 has not been placed on the storage device **150** (as a result, a population error, for example, appears). The storage device **150** contacts the data access rights manager **130** with a request for data shown in the structure but absent from the storage device **150.** The data access rights manager **130** is contacted, for example, through an agent **130a,** which in step **311** will contact the anonymizer **160** and, in step **312,** will convert the identifier UserID'100 in the request to the original UserID100 with the aid of the anonymizer **160,** and will transfer the request to the data access rights manager , in step **313.** According to the results of the request from the storage device **150,** the data access rights manager **130** updates the information about the data to be collected, where the updating includes at least two steps:
- detecting, among the user's devices, the devices that may provide the requested data (in the example considered here, it is a mobile telephone **101a**);
- updating the fields of the structures (in the present example, adding the "location" field) for the data collector **120,** particularly in the devices where fields containing the requested data are added; in the present example, this is step **314.**

In step **320,** the storage device receives the requested data. In the example under consideration, in step **320,** **Fig. 3** consists of a number of sub-steps (**320a - 320f**) as shown in **Fig. 3b****.** In step **320a,** the updated user's data structure with information including the location is sent to the storage device **150,** and the user identifier in the system **100** with the second token is sent to the anonymizer **160,** in step **320b.** The anonymizer **160** converts the identifier in step **320c,** and the converted identifier UserID'100 is transferred, in step **320d,** to the storage device **150.** In the storage device **150,** in step **320e,** the identifier is linked with the updated user's data structure based on finding identical tokens. The storage device **150** then links the received data structure to other data structures for this user in step **320f.** The storage device can then complete the necessary fields at the request of the user data processor **102.**

An example of the implementation of the method **200** for providing user's data to user data processor will now be considered based on **Figs. 2a - 2b****.** The process blocker **110** blocks the processing of data for an advertising network M; more specifically, it blocks the collection of URL addresses/resources that the user visits (clickstream) and the history of search queries.

The blocking is carried out by:
- in step **211,** removing from the web data **103,** including data created by a browser **102b,** cookie files containing a temporary user identifier in the advertising network M installed by scripts on web pages;
- in step **212,** in the network traffic, spoofing the permanent user identifier in the advertising network M, which is identical to the log-in of the account with which the user has entered the browser; and
- spoofing the identifier of the browser installation **102b** in the network traffic.

Based on the clickstream and search queries, the advertising network M carries out profiling, followed by the targeting of advertising messages. Thus, the advertising network will not be able to carry out targeting since it does not have the user profile, resulting in a marked reduction in conversion (the number of clicks on an advertising announcement), and since the operating model of the advertising network is CPC (cost per click), there is a corresponding decline in revenue per user, ARPU (average revenue per user). Similar blocking is used by the user, since the user wishes to avoid the appearance of advertising of goods in the "health" category in his browser (for example, medicines, medical clinics and other items from the "health" category). However, the user is prepared to receive targeted advertising for other categories of goods and services from said advertising network M ("Sport", "Education", "Books", ..., "N"). The user is prepared to share only the history of search queries and the web resources visited for profiling.

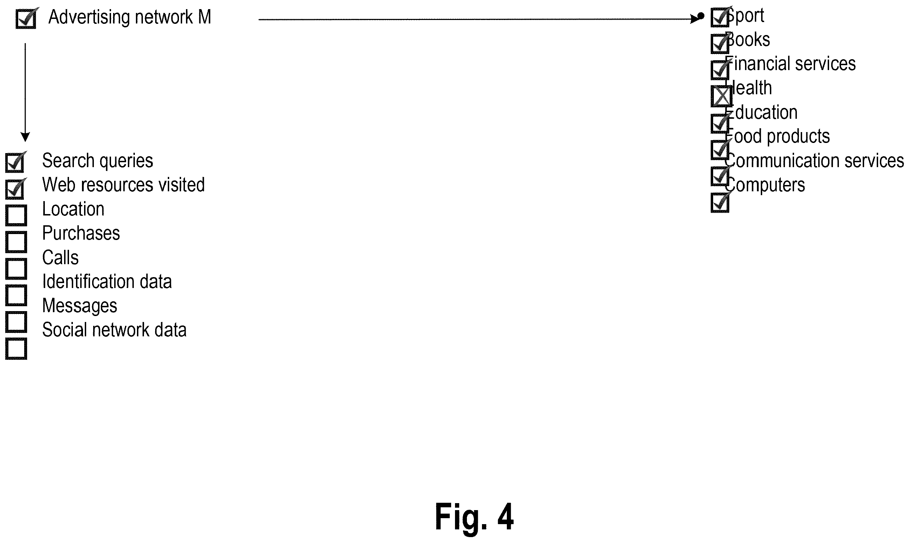

**Fig. 4** illustrates an example of a configuration of data permissions. Configurations of data permissions are specified in step **221.** The system **100** also blocks any advertising announcements not wanted by the user, by the process blocker **110.** In step **212,** the process blocker **110** will remove advertising data with unwanted content from the traffic and block the loading of the advertising data with unwanted content, namely advertising data and content relating to the "health" category.

Thus, after the specified settings, in step **221,** the data access rights manager **130** defines rights for the advertising network M to the whole history of search queries and the clickstream, excluding search queries and clicks relating to the "health" category. The information relating to this is sent out to the system **100,** in step **222.** Thus, in step **222,** the data collector **120** receives the data structure with fields for population, and the structure comprises the following fields:
- search queries;
- web resources visited;
   ∘ art;
   ∘ entertainment;
   ∘ business;
   ∘ games;
   ∘ general;
   ∘ job seeking;
   ∘ etc.

In the present step, the data collector **120** is ordered to collect all the search queries and all the web resources visited that cannot be assigned to the health category. Profiling for targeting advertising materials in the "health" category may be used by various categories of web resources, and therefore the data access rights manager **130,** when creating a structure for the means **120,** reduces the general category of "health" to more partial categories (subcategories) of web resources, and does not include them in the fields of the structure for the means **120,** for example, such subcategories of web resources as medicines, medical services, medical information portals and the like.

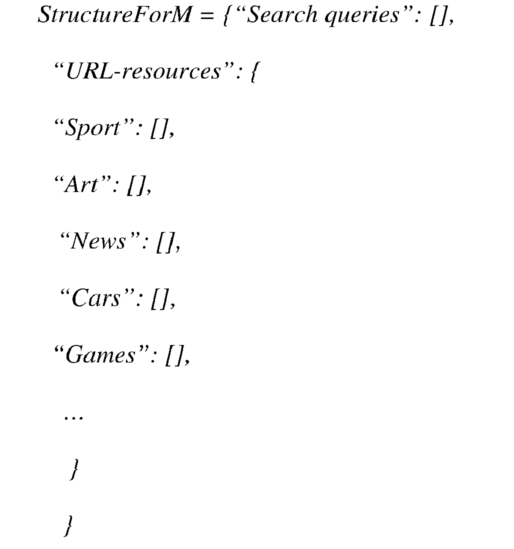

In step **222,** the modifier **140** receives the categories of search queries whose transfer is prohibited. The modifier **140** uses a natural language processing technology to analyze and classify the search queries. In step **222,** the storage device **150** receives the access rights for the advertising network M.

Then, in step **222a,** the data collector **120** collects the search queries from all categories and the web resources visited that do not relate to the "health" category, and populates the fields of the structure. The data for the population of the structure are selected by the data collector **120** from the retained web data **103** accumulated in the course of the user's network activity. These data are created both by the browser **102a** and by additional means of the system **100,** such as plug-ins in the browser or UI interceptors (these are not shown in **Fig. 2a****,** and are modules of the data collector **120**).

Example of a structure format:

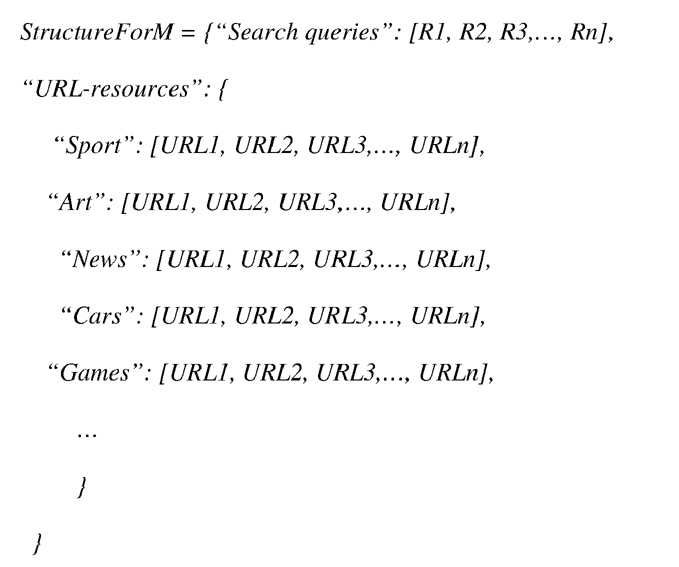

In step **223,** the populated structure is transferred to the modifier **140.**

Based on the information about the prohibited categories received, in step **222,** from the data access rights manager **130,** the modifier **140** analyzes the fields of the search queries for the presence of queries relating to the "health" category. The search queries relating to the "health" category (in the present example, this is query R3) are then removed from the received structure. In step **224,** the modifier **140** receives from the user data processor **102** the user identifier in the advertising network M (UserIDM) from the cookie file or from a profile in the browser, and the user identifier in the system **100** (UserID100) from the data access rights manager **130** (not shown in **Fig. 2a**). The structure with the user's data, comprising the search queries and URL-resources, is then encrypted with a public key (Rn→Rn', URLn→URLn'). The modifier **140** generates a pair of identical random tokens. One of the tokens is linked to the identifiers UserIDM and UserID 100:

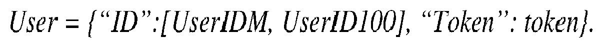

The second token is linked to the user's data structure (it is added in an additional field to the structure:

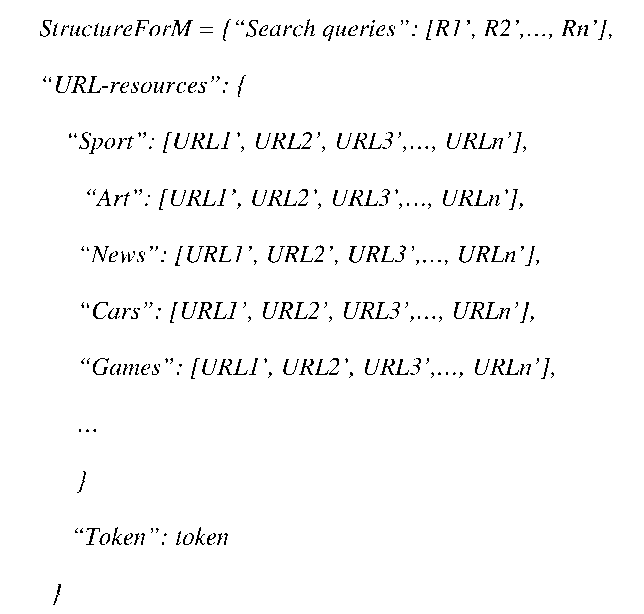

In step **225a,** the user's data structure is then sent to the storage device **150,** and the identifiers with the second token are sent to the anonymizer **160** in step **225b.** The anonymizer **160** converts the identifiers in step **225c.** The anonymizer **160** changes the original user identifier in the system **100** and the identifier for the advertising network M, in order to protect the user's data in case of a data leak from the storage device **150,** since the data owner cannot be recognized with the changed identifiers:

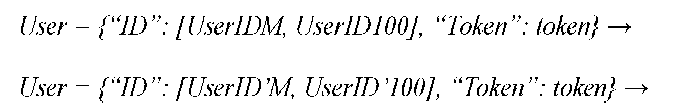

The converted identifiers UserID' 100 and UserID'M are transferred, in step **225d,** to the storage device **150.** In the storage device **150,** the identifiers are linked with the user's data structure on the basis of identical tokens, in step **226.**

The storage device **150** links the received data structure with other data structures for this user in step **227:**

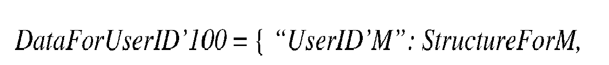

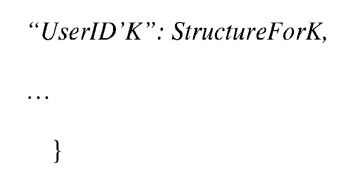

The data requests from the advertising network M for the processing of the data are now redirected to the storage device **150** through the anonymizer **160,** as shown in **Fig. 2b****.** As can be seen in **Fig. 2b****,** the request is sent by the server **102a** through the browser **102b,** in step **230.** The request comprises a user identifier in the advertising network M, UserIDM. In step **240,** the request is redirected to the anonymizer **160.** When the request is redirected, the user identifier in the system **100** is attached to the request:

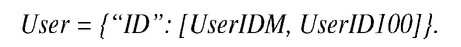

In step **241,** the anonymizer **160** converts the user identifier in the system **100** and the identifier in the advertising network M:

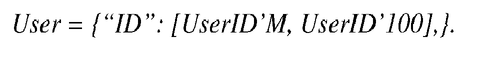

In addition, in step **242,** it transfers the converted identifiers to the storage device **150.** The storage device **150** detects, in step **243,** the data linked to the user, on the basis of UserID' 100, and determines the rights for the advertising network M in step **250;** in the present example, this takes place by means of a search for UserID'M and its associated data structure. When the data are detected, they are returned, together with the UserID'M, to the anonymizer **160,** in step **251.** In step **252,** the anonymizer **160** returns the original value to the user identifier in the network M, and the user's data, together with the original UserIDM, is transferred to the user data processor **102** of the advertising network, while the occurrence of the transfer is recorded by the retrieval record **180.**

In one example, the advertising network may contact the anonymizer directly without the redirection of requests by the device **101,** while in the present case the user data processor itself redirects the request: instead of the device it contacts the storage device, in a particular case, through the anonymizer **160.** In another example, the data is not transferred to the user data processor **102,** but access to a copy of the data placed in the storage device **150** is granted.

The system shown in **Fig. 1** is also used for implementing the method of updating the user's data **300.** This method is implemented when not all the data for processing are placed in the storage device and/or when the user has more than one device from which data may be received. In the present method, steps **210, 230, 240** and **250** are similar to the steps of the method shown in

### Fig. 2.

In step **310,** the storage device detect that the data for which the user data processor have received access rights are not located in the storage device.

In step **320,** the missing user's data is transferred from the device to the storage device. In one example, when the absence of the data is detected, the storage device **150** contacts the data access rights manager **130.** The data access right manager **130** updates the data model, in accordance with which the data collector **120** populates new fields in the structure (in the present example, those relating to the location). The data access rights manager **130** then sends the data to the storage device **150.** In a particular case, the data are sent with the use of the modifier **140** (the means **140** carries out an analysis of the data for criticality and other conformity with the rights established by the data access rights manager **130**) and the anonymizer **160,** if the detected data require further conversion.

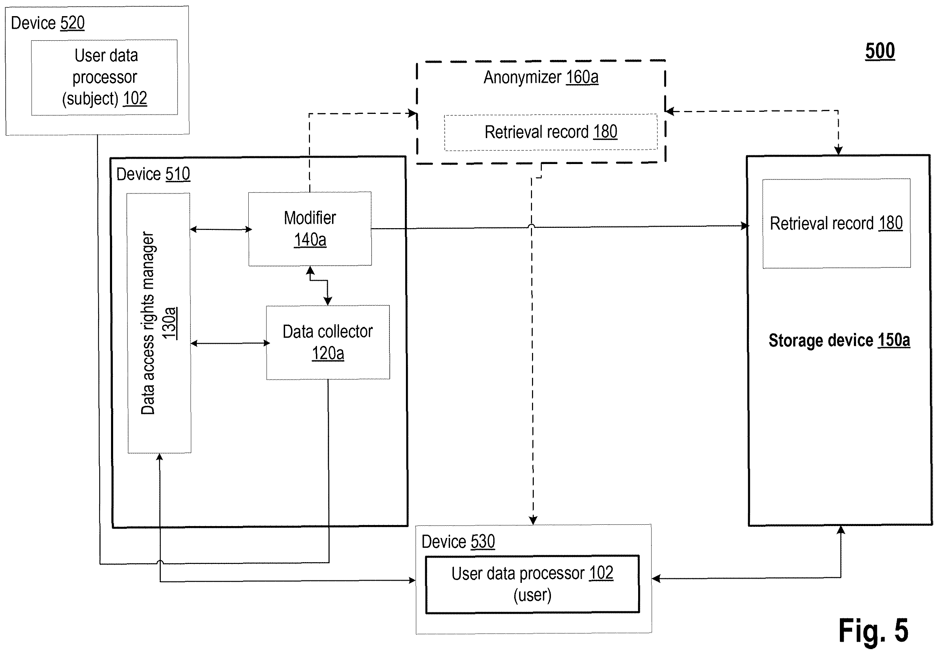

**Fig. 5** illustrates an exemplary system for exchanging a user's data, designed for granting access to the user's data via a cryptocontainer.

A *"cryptocontainer"* comprises a file that has a specified structure (examples of structures are described below), comprising at least a fully encrypted selection of the elements of the user's data.

The process of encryption and decryption of the data is carried out automatically by the system **500,** and is completely transparent to the user. Cryptocontainers may be used to exchange large volumes of confidential information that must be edited for different users. In a particular case, the selection of data elements is created in the form of a file system, where each data element is a file. The system **500** includes an administration device **510,** a data subject device **520** and a data user device **530.**

In one example, the functions of the administration device **510** and the data subject device **520** are performed by a single device. The system **500** also includes a data collector **120a,** data access rights manager **130a,** modifier **140a,** storage device **150a,** anonymizer **160a** (optionally), and retrieval record **180.**

The data is collected from the device **520** by the data collector **120a** of the device **510.** The data collector **120a** transfers the data to the modifier **140a.** With the aid of the modifier **140a,** using the received data, a cryptocontainer is formed (created) (if no previous suitable container has been created; otherwise the existing container is modified), and this cryptocontainer is transferred to the storage device **150a.** When access to the user's data is requested by the device **530,** the rights are issued via the data access rights manager **130a,** and the cryptocontainer (referred to hereafter as the "container") is modified via the modifier **140a.** The user data processor **102** of the device **530** is granted access to a copy of the container by the storage device **150a.** In order to receive access to the user's data via the container, the container must first be formed, after which the user data processor **102** are granted access to the data elements in the container through a modification of said container by the means **140a.** In another example, the forming of the container and the granting of access to the user's data and to the copy of the container may take place in a single iteration.

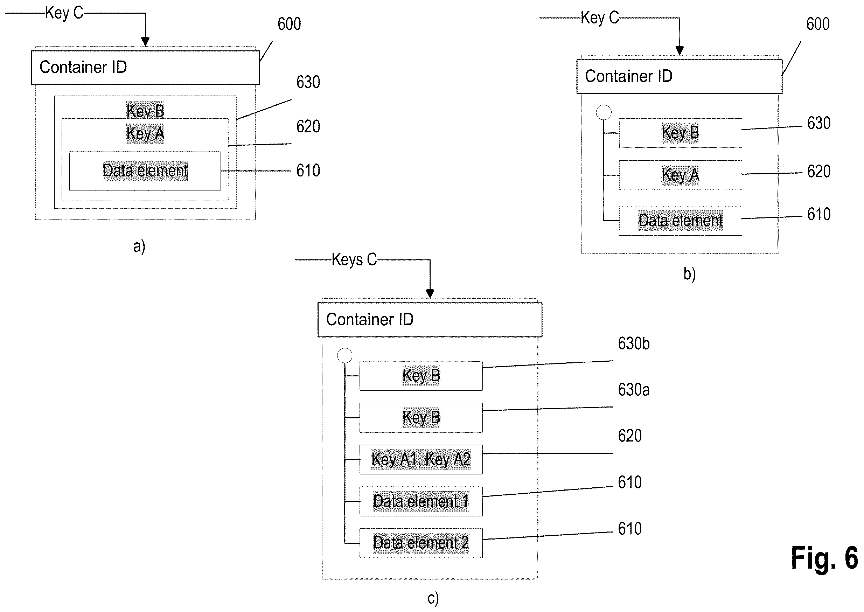

**Fig. 6** illustrates examples of containers **600.** A container **600** contains at least one data element **610,** containing a user's data. A data element is the smallest indivisible (elementary) unit of data for the purposes of the storage method. Examples of data elements **610** include files relating to a file system (in this case, an encrypted selection of data elements is a file system), entries in tables relating to relational databases (an encrypted selection of data elements is a table), and fields relating to data structures in non-relational data bases (an encrypted selection of data is determined from the structure of the database), and others. In an individual user profile, the data elements **610** may be specialized profiles which combine information about the user relating to a single category (for example, medical history, legal information, information about the user as a consumer, etc.). Each data element is encrypted. Various algorithms known from the prior art may be used for the encryption. The encrypted data element, or the encrypted selection of data elements, forms a part of the container structure, together with a structure for access to the data elements **620** (or to the data elements, if there are at least two of them) and the access structure for the user data processor **630.** A key (referred to hereafter as key A) is kept together with the encrypted data element, for the decryption of the data element.

Key A is stored in the access structure for the element **620.** Key A is also encrypted. Key A may be encrypted by means of various algorithms. In one example, key A is a combination of at least two keys, for example a public and a private key or keys for the decryption of data elements, when there are at least two such elements.

The key for access to key A (key B) is stored in the access structures for the user data processor **630.** In a particular case, key B is a combination of at least two keys, for example a public and a private key. Key B is used for the encryption of key A, and for its decryption when data are read or written. Key B is also encrypted.

Key B is encrypted by a key (key C) linked to the user data processor **102.** Each user data processor is linked to its own key C. In a particular case, key C is a combination of at least two keys, for example a public and a private key. Key C is either created specially via the modifier **140a** for the container, or is received from the user data processor **102** for which the modifier **140a** form the structure **630.** The keys C are used to divide the rights of access to the container among different user data processor **102.** Each user data processor **102** has its own unique key Cn (a key Cn is a member of a plurality of keys C), which it uses for operations with the container. It is therefore advisable for each user data processor to store its key Cn in a reliable way, to ensure that one user data processor **102** cannot receive the key of another user data processor.

A container may be formed in various ways. In one example, the container may be a frame, as shown in **Fig. 6a****,** for which key A encrypts the data element **610,** and then key A is encrypted by key B together with the encrypted data element **610,** and the result is jointly encrypted by key B and key C.

In another example, the container takes the form of a structure containing encrypted objects, as shown in **Fig. 6b****,** and the elements of this structure are:
- an encrypted data element **610** (at least one);
- a structure for access to the element **620,** having at least one encrypted key A; and
- an access structure **630** for the user data processor, having at least one key B encrypted by key C.

There may be more than one access structure **630** for the user data processorin the container, and the number of these structures depends on the number of user data processor **102** to which access is granted to the data in the container **600.** Also, there may be more than one such data element, as in the example of the container illustrated in **Fig. 6c****.**

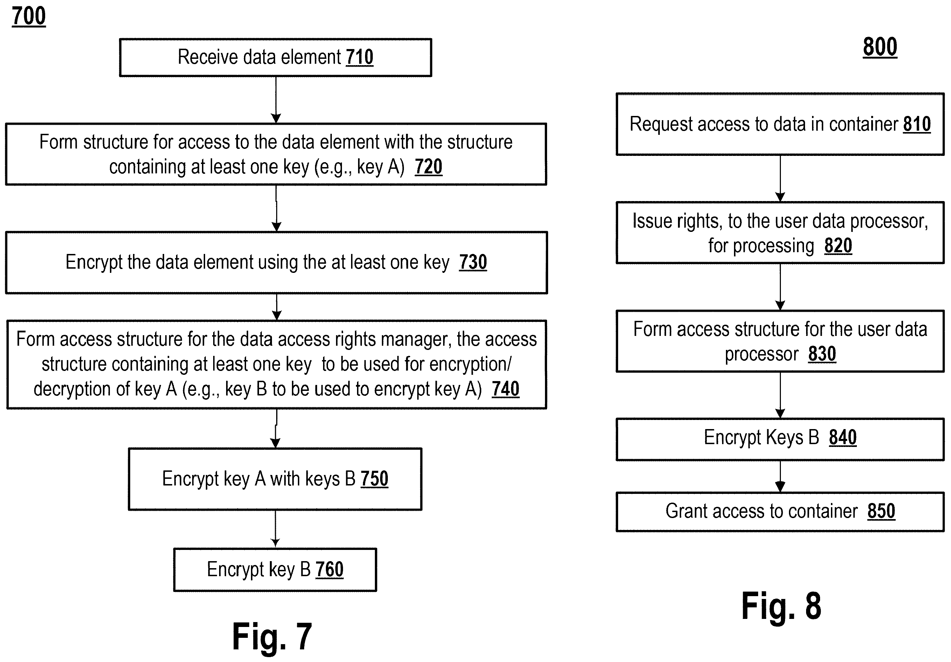

**Fig. 7** illustrates an example of a method **700** for forming (creating) a new container.

In step **710,** the data element **610** is received via the data collector **120a,** and the data element is transferred to the modifier **140a.**

In step **720,** a structure for access to the data element **620** is formed via the modifier **140a** for the data element **610.** The structure **620** contains at least one key for the encryption of the data element **610** (key A).

In step **730,** the data element **610** is encrypted via the modifier **140a,** using key A.

Then, in step **740,** via the modifier **140a,** the access structure for the rights manager **630a** is formed (a particular case of an access structure for the user data processor **630,** which contains keys accessible to the means of the device **510,** since the keys in said structure are encrypted by keys C from the data access rights manager **130a**). The structure **630a** contains a key for the encryption/decryption of key A, namely key B.

In step **750,** when the structure **630a** is formed, key B is received from the data access rights manager **130a** and is used to encrypt key.

In step **760,** Key B is then encrypted via the modifier **140a.** A key from the data access rights manager **130a** (key C) is used for the encryption of key B. The result is the formation of a container storing the data element **610,** access to which is granted only to the means of the administration device **510.** In one example, the formed container is located in the storage device **150a.**

In one example, key B is a combination of keys (a public key B and a private key B), and key C is a combination of keys (a public key C and a private key C). The private key B is used to encrypt key A, and the public key C is used to encrypt key B.

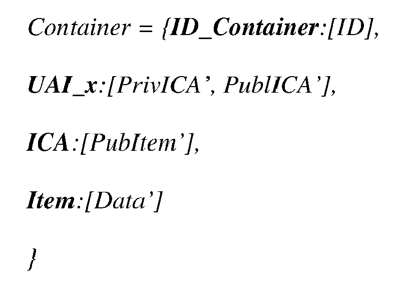

The particular case of a formed container **600** has been described above, where:
- *Item* is a structure that stores an encrypted data element **610.**
- *Data'* is an encrypted data element *Data* **610;**
- *ICA* is a structure for access to the data element **620;**
- *PubItem* is a key for encrypting the data element (key A);
- *UAI_x* is an access structure for the rights manager **630a;**
- *PrivICA* is a key for encrypting the PubItem key (private key B);
- *PublICA* is a key for decrypting the PubItem key (public key B);
- *ID_Container* is a structure that stores information about the container **600;**
- *ID* is an identifier of the container **600;** and
- *PrivICA', PublICA', PubItem'* signifies that the keys (*PrivICA, PublICA, PubItem*) are encrypted.

**Fig. 8** illustrates an example of a method **800** for granting a user data processor access to a previously formed container **600** to a user data processor **102.** Initially, it is only the user's data processors of the device **510** that have access to the data elements **610** in the formed container **600.** Let us consider the way in which access to the user's data in the container is granted to the user data processor **102** of a third-party device **530.**

In step **810,** access is requested, via the user data processor **102** of the device **530,** to the data in the container **600,** which was formed previously and is located, for example, in the storage device **150a.**

In step **820,** rights for the user data processor **102** are issued via the data access rights manager **130a,** and information about this is transferred to the modifier **140a.**

In step **830,** an access structure **630b** for the user data processor **102,** is formed, for which purpose the modifier **140a** in the container **600** decrypt key B in the access structure for the rights manager **630a,** wherein at least one decrypted key is copied (if key B takes the form of at least two keys) from the structure **630a** to the structure **630b** that is to be formed.

The number of copied keys depends on the rights issued in step **820.** If the user data processor **102** receives rights to read the data element, key B will be copied from the structure **630a,** and this will enable key A to be decrypted (where key A is required to decrypt the data element **610** in the container **600**). If the user data processor **102** receives rights to write a data element **610,** key B will be copied, making it possible to decrypt key A, which will be used to encrypt the added data elements **610.** When the access structure **630b** for the user data processor **102** has been formed (and key B has been copied), then the modifier **140a** is used to receive key C for the encryption of key B in the formed access structure **630b.** Said copy of key C is different from the key C used in step **750** of method **700.** In the present case, the received copy of key C is linked to the user data processor **102** of the device **530.**

Key C, linked to the user data processor **102,** can be received in various ways via the modifier **140a.** In one example, said key C is generated directly by the modifier **140a,** while in another example it is received directly from the user data processor **102** or from a public source where it has been published by the user data processor **102.** For example, a certificate with the private and public key may be generated on behalf of an organization with which the device **530** associated with the user data processor **102** is linked. The combination of the public and private key forms the key Co of said organization. The public key from the combination is placed in a resource of some kind (for example, a database of public keys **540**), from which said key may be received by the modifier **140a.**

In step **840,** key B is encrypted by the received key C, via the modifier. Access to the data elements in the container **600** can now be obtained either via the user data processor of the device **510,** or via the user data processor **102** of the device **530.** Each party obtains access to the data element **610** with the aid of its own copy of key C. If a public key C was used to encrypt key B, then key B is decrypted by the private key C.

It should also be noted that, in most cases, it is not enough to obtain access to the user's data element. Access must be granted by the storage device **150a** to the actual copy of the container that stores the data element. If this has not been done, then access to the copy (body) of the container in the storage device **150a** is granted in step **850.**

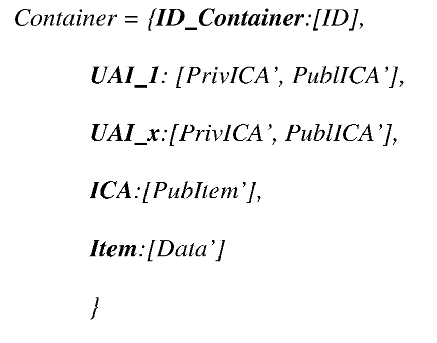

A description has been given above of the particular case of a formed container **600** to which has been added an access structure for the user data processor **102,** where:
- *UAI_1* is an access structure **630b** for the user data processor **102.**

In one example, as in the examples concerned with medical history below, no structure for access to the element **620** is used, and the keys for accessing the data (keys A) are contained in the access structure for the user data processor **630.** In most cases, the division of the keys into two levels (the structure for access to the data element **620** and the access structure for the user data processor **630**) is logically required in order that each key should have exactly one purpose. This results in two useful properties:
- high productivity; and
- cryptographic strength.

With this two-level division, the keys can be rotated independently of each other. In particular, in a periodic change of keys B it will be possible to replace the keys B from the access structure for the user data processor **630** without re-encrypting the data elements themselves, which are significantly greater in volume; it is sufficient to re-encrypt the keys A. This is important, for example, in the context of a file system, since access to the element data will be blocked during said service operation. Consequently, the shorter such delays are, the better. For each change of the data elements themselves, it is necessary to use a new key A for their encryption. Thus there is no accumulation of material for hacking the key.

The anonymizer **160a** is used in the transfer of data from the device **510** to the storage device **150a** and from the means **150a** to the device **530** and the device **520.** In one example, the anonymizer **160a** converts the identifier of a container when the container is transferred to the storage device **150a,** and carries out the reverse conversion when the container is transferred from the storage device **150a,** or during the execution of requests for the container in the storage device **150a** from the device **510,** the device **520** and the device **530.** This increases the robustness of the system **500** to leaks.

In an example below, relating to a medical history,
- the copy of key A takes the form of a combination of the keys *PublItem* and *PrivItem;*
- the copy of key C belonging to the Service takes the form of a combination of the keys *PublService, PrivService;*
- the copy of key C belonging to the patient takes the form of a combination of the keys *PublPatient, PrivPatient;* and
- the copy of key C belonging to the clinic takes the form of a combination of the keys *PublClinic, PrivClinic.*

In said example, key B is not used, in order to simplify the example.

The system for exchanging data using cryptocontainers may be applied very widely. For example, it may be used for the storage and transfer of passport data, for the exchange of data among government bodies, for the storage of a unified citizen profile, and for the control of access to parts of the profile by various organizations. Let us consider an example of the use of a variant of said system for storing and updating a medical history, which may form part of the unified citizen profile.

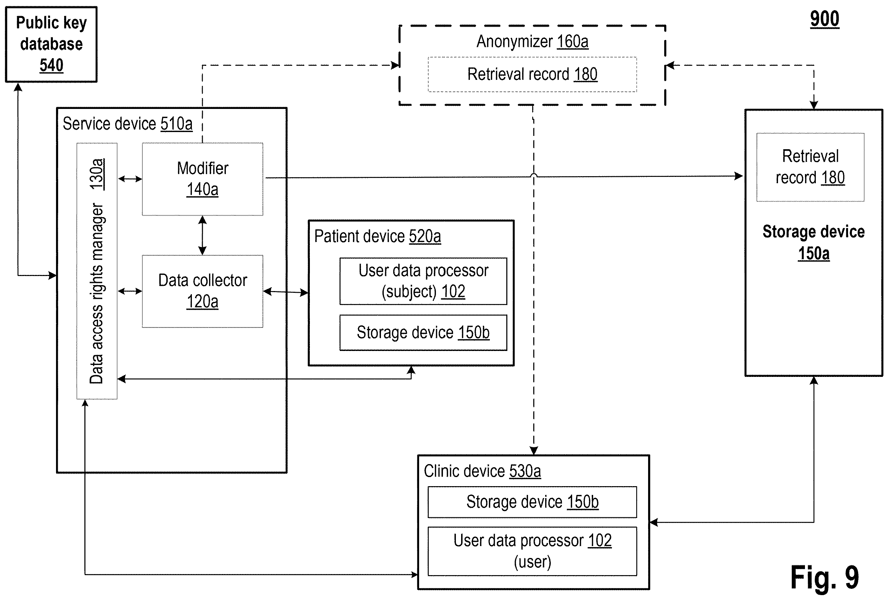

**Fig. 9** illustrates an example of a system **900** for exchanging a user's data, designed for granting access to a patient's medical history via a container. The system **900** comprises a patient device **520a** with a user data processor **102** and a local storage device **150b;** a health clinic device **530a** with a local storage device **150b** and a user data processor **102;** a device of the Federal Supervision Service for Healthcare **510a** (referred to hereafter as "the Service") with a central storage device for storing medical histories **150a;** retrieval record **180;** a public key database **540;** and anonymizer **160a** (optional).

Here, the user data processor **102** are:
- a user data processor **102** in the patient device **520a;** and
- a user data processor **102** in the clinic device **530a.**

It administers the medical history of the Service. The device **510a** and the storage device **150a** belong to the Service. The data collector **120a** receives a medical history (*MedicalData*) and transfers it to the modifier **140a.** The modifier **140a** creates a pair of keys *(PrivItem, PublItem),* namely a public key (*PublItem*) for decrypting data (read access) and a private key (*PrivItem*) for encrypting data (write access). To simplify the example, we will consider one pair of keys, and the data element in this case will be the whole medical history. In a particular case, the modifier **140a** may create several pairs of keys for each medical specialty (cardiology, urology, surgery, etc.), where the history for each specialty is an independent data element. The medical history received by the data collector **120a** is encrypted by the private key *PrivItem* with the aid of the modifier **140a** *(MedicalData -> MedicalData').* The information about this is recorded by the retrieval record **180.** An access structure for the Service (*UAI_Service*) is then formed, the created pair of keys is placed within it and is encrypted by the Service's public key *PublService* (PrivItem->PrivItem', PublItem->PublItem'), and the access structure for the Service is combined with the encrypted medical history, thus forming a container:

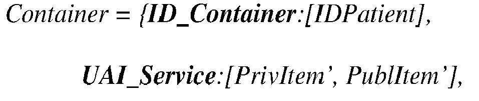

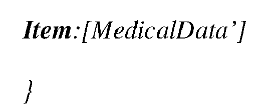

The container is transferred to the storage device **150a.** Any party having access to the storage device **150a,** for example the patient or health clinics, may be given access to the container and the object. However, in order to obtain access to the data in the container, it is necessary to receive the rights issued by the data access rights manager of the Service **130a.** The patient may receive the rights for reading only, and the health clinics may receive rights for both reading and writing. Any access to the data in the container in the storage device is recorded by the retrieval record **180.** An entry in the medical history and any amendment to it may be made only in the storage device **150a.** Reading may take place from local copies in local stores **150b,** linked to the user data processor **102.** In order to receive rights of access to the data in the container, the patient, using the user data processor **102** of the device **520a,** contacts the data access rights manager **130a,** where the user data processor **102** of the device **520a** provide patient's identification data and other data in accordance with local laws. If the data are recognized as valid, the data access rights manager **130a** defines read access rights and asks the user data processor **102** of the device **520a** for the patient's public key. In the next step, the rights manager transfer the patient's identifier and his public key to the modifier **140a.** The modifier **140a** contact the storage device **150a** and make a modification to the container, where:
- the public key for access to the history is decrypted (*PublItem' -> PublItem*) with the Service's private key (*PrivService*) in the access structure for the Service;
- the public key is copied;
- an access structure for the patient is created, and the public key *PublItem* is placed in it; and
- the public key for access to the history is encrypted (*PublItem -> PublItem'*) with the patient's public key *PublPatient* received from the patient device means **520a.**

The container now contains two structures for access to the medical history data:

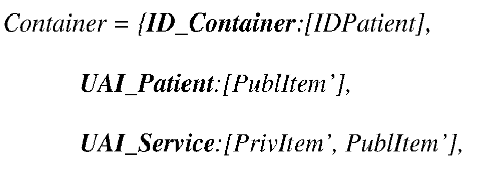

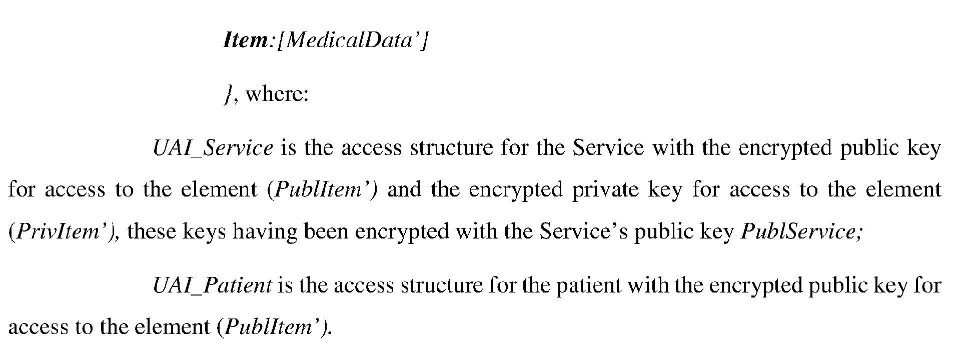

The patient receives access to his medical history via the user data processor **102** of the device **520a.** The user data processor **120** contacts the storage device **150a** and receives access to the container. The public key *PublItem* in the patient's access structure is decrypted with the patient's private key *PrivPatient.* The relevant fields of the medical history are decrypted with the public key *PublItem.* In a particular case, the user data processor copies the container from the storage device **150a** and stores it locally, using the storage device **150b.**

Let us consider an example in which the health clinic receives access to a medical history. In a particular case, when rights for a health clinic are requested from the user data processor **102** on a patient's device **520a,** a notification is sent, and, on confirmation by the user data processor **102** in the patient's device **520a,** the rights are sent to the clinic. In another particular case, the user data processor **102** in the patient's device **520a** may itself initiate the definition of the rights, having sent an application to the data access rights manager **130a** of the Service with a request. Let us consider a scenario in which the patient acts as the initiator of the granting of rights to the clinic. The system also includes a database of public keys of the health clinics **540a,** in which the clinics' keys are placed after approval by the Service. The user data processor **102** sends a request from the patient's device **520a** to the Service's data access rights manager **130a** for the provision of rights of access to the patient's medical history to the user data processors that operate on behalf of the health clinic. The request contains at least the identification data of the clinic. The Service's data access rights manager **130a** identify the patient and check for the presence of the health clinic's public keys in the database **540.** If there is an entry with the health clinic's public key in the database, the Service's data access rights manager **130a** defines the health clinic's rights of access to the medical history of the identified patient. The health clinic receives rights for reading and writing. In the next step, the Service's data access rights manager **130a** transfer the patient's identifier and the clinic's public key to the modifier **140a.**

The storage device **150a** is contacted via the modifier **140a,** and the patient's container (the container corresponding to the patient identifier) is modified, where:
- the Service's private key *PrivService* is used to decrypt the field of the Service's access structure containing the public key for access to the medical history: *PublItem' -> PublItem;*
- the public key *PublItem* is copied;
- the Service's public key *PublService* is used to encrypt the field of the Service's access structure containing the public key for access to the medical history: *PublItem -> PublItem';*
- the Service's private key *PrivService* is used to decrypt the field of the Service's access structure containing the private key for access to the medical history: *PrivlItem' -> PrivlItem;*
- the private key *PrivItem* is copied;
- the Service's public key *PublService* is used to encrypt the field of the Service's access structure containing the private key for access to the medical history: *PrivlItem -> PrivlItem'*;
- an access structure for the health clinic is created, and the public key *PublItem* and the private key *PrivItem* are placed in it;
- the clinic's public key *PublClinic* is used to encrypt the field of the structure containing the public key: *PublItem->PubItem';* and
- the clinic's public key *PublClinic* is used to encrypt the field of the structure containing the private key *PrivItem.*

The container now contains three structures for access to the medical history data:

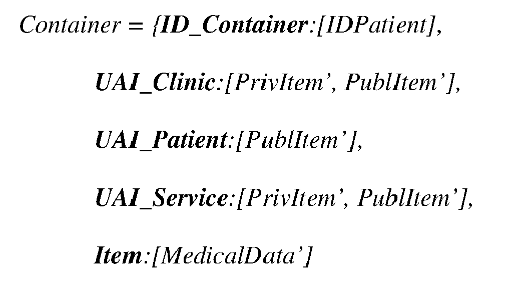

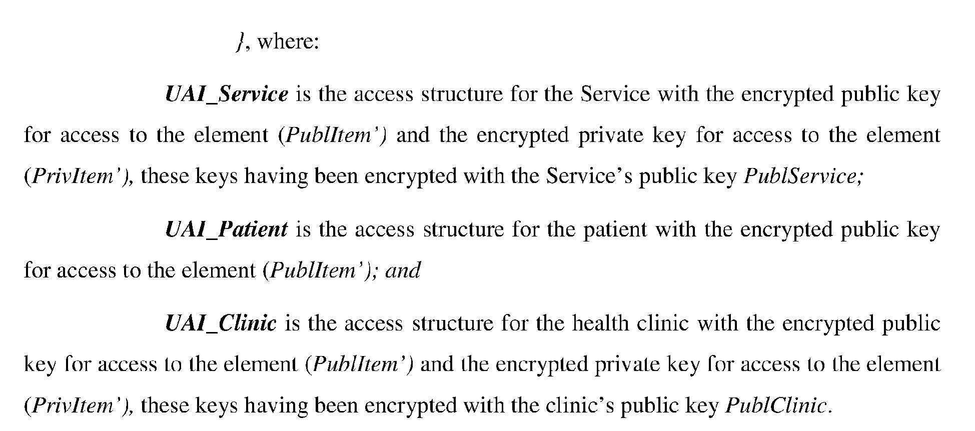

The health clinic receives read access to the patient's medical history via the user data processor **102** of the device **530a.** The user data processor **102** of the device **530a** contacts the storage device **150a** and receives access to the container. The clinic's private key *PrivClinic* is used to decrypt the public key *PublItem* in the clinic's access structure. The public key *PublItem* is used to decrypt the relevant fields of the medical history. In a particular case, the user data processor **102** copy the container from the storage device **150a** and store it locally, using the storage device **150b.**

The health clinic receives write access to the patient's medical history via the user data processor **102** of the device **530a.** The storage device **150a** is contacted via the user data processor **102** and access is received to the container. The clinic's private key *PrivClinic* is used to decrypt the private key *PrivlItem* and the public key *PublItem* in the clinic's access structure. The public key *PublItem* is used to decrypt the relevant fields of the medical history. Data are added to the medical history. The private key *PrivItem* is used to encrypt said data. New data elements are written to the history in the same way.

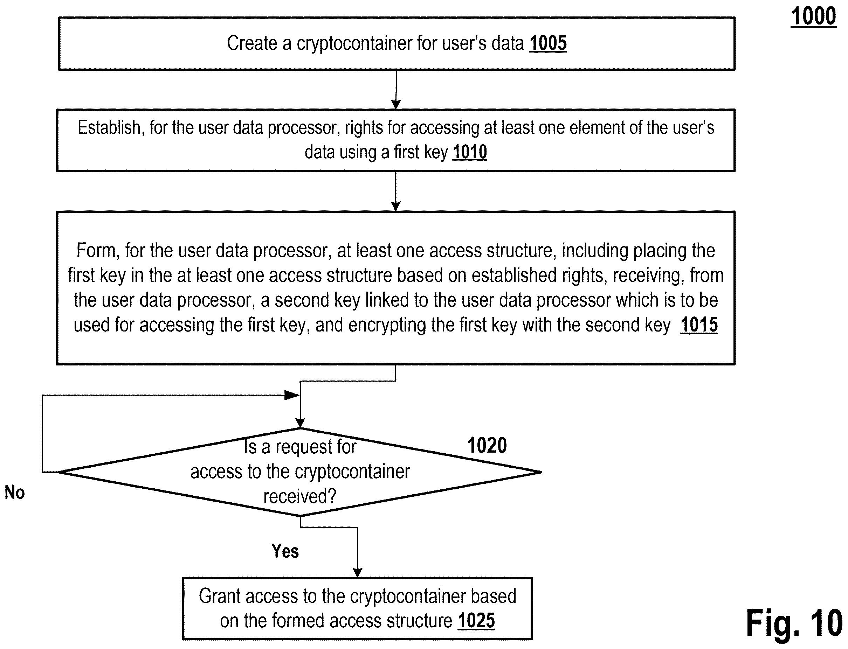

**Fig. 10** illustrates a method **1000** for granting a user data processor access to a cryptocontainer of user data.

In step **1005,** method **1000** creates a cryptocontainer for user's data, wherein the cryptocontainer receives at least one element of the user's data and encrypts the at least one element.

In step **1010,** method **1000** establishes, for the user data processor, rights for accessing the at least one element of the user's data using a first key.

In step **1015,** method **1000** forms, for the user data processor, at least one access structure, wherein the forming of the at least one access structure includes: placing the first key in the at least one access structure based on the established rights, receiving, from the user data processor, a second key linked to the user data processor which is to be used for accessing the first key, and encrypting the first key with the second key.

In step **1020,** method **1000** determines whether or not a a request for access to the cryptocontainer is received. When the request is received, the method proceeds to step **1025.** Otherwise the method remains in step **1020** and continues to monitor for requests.

In step **1025,** when a request for access to the cryptocontainer is received, the method **1000** grants, to the user data processor, access to the cyptocontainer based on the formed at least one access structure. The method then proceeds to steps **1020** and **1005,** as needed.

In one example, the cryptocontainer encrypts the at least one element using the first key.

In one example, the second key is a combination of at least a pair of keys comprising at least one private key and at least one public key.

In one example, the at least one public key is received for encrypting the first key.

In one example, information about the second key is transferred to the user data processor.

In one example, the at least one public key is received from the user data processor to which access is granted.

In one example, each element of the at least one element of the user's data is encrypting using a respective separate first key.

In one example, the rights for accessing the at least one element are established based on a set of actions that the user data processor is permitted to perform on the at least one element of the user data.

In one example, the set of actions includes at least one of: reading data, and writing data.

In one example, a separate first key is created for each action of the set of actions.

In one example, the created first key comprises a combination of at least a pair of keys, the pair of keys including at least one private first key and at least one public first key.

In one example, the pair of keys is formed from the private first key and the public first key such that the private first key is used for encrypting data when writing takes place and the public first key is used for decrypting the data when reading takes place.

In one example, the first public key is placed in the at least one access structure when rights for reading data from a field are established.

In one example, the first private key is placed in the at least one access structure when rights for writing data into a field are established.

In one example, the method further comprises: during the creation of the cryptocontainer for user's data, adding an access structure for a data access rights manager, wherein at least one first key for the added access structure of the data access rights manager is placed in the access structure of the user data processor, and wherein the at least one first key is encrypted.

In one example, the placing, in the access structure of the user data processor, the at least one first key for the added access structure of the data access rights manager includes extracting the first key from the access structure of the data access rights manager.

In one example, the method further comprises: requesting, on behalf of the user data processor, rights for accessing elements of the user's data in the created cryptocontainer.

**Fig. 11** is a block diagram illustrating a computer system 20 on which examples of systems and methods for granting a user data processor access to a cryptocontainer of user data may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 11****,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for granting a user data processor access to a cryptocontainer of user data, the method comprising:
creating a cryptocontainer for user's data, wherein the cryptocontainer receives at least one element of the user's data and encrypts the at least one element;
establishing, for the user data processor, rights for accessing the at least one element of the user's data using a first key;
forming, for the user data processor, at least one access structure, wherein the forming of the at least one access structure includes:
placing the first key in the at least one access structure based on the established rights;
receiving, from the user data processor, a second key linked to the user data processor which is to be used for accessing the first key; and
encrypting the first key with the second key; and
when a request for access to the cryptocontainer is received, granting, to the user data processor, access to the cyptocontainer based on the formed at least one access structure.

2. The method of claim 1, wherein the cryptocontainer encrypts the at least one element using the first key.

3. The method of claim 1, wherein the second key is a combination of at least a pair of keys comprising at least one private key and at least one public key.

4. The method of claim 3, wherein the at least one public key is received for encrypting the first key.

5. The method of claim 4, wherein information about the second key is transferred to the user data processor.

6. The method of claim 4, wherein the at least one public key is received from the user data processor to which access is granted.

7. The method of claim 1, wherein each element of the at least one element of the user's data is encrypting using a respective separate first key.

8. The method of claim 1, wherein the rights for accessing the at least one element are established based on a set of actions that the user data processor is permitted to perform on the at least one element of the user data.

9. The method of claim 8, wherein the set of actions includes at least one of: reading data, and writing data.

10. The method of claim 9, wherein a separate first key is created for each action of the set of actions.

11. The method of claim 10, wherein the created first key comprises a combination of at least a pair of keys, the pair of keys including at least one private first key and at least one public first key.

12. The methof of claim 11, wherein the pair of keys is formed from the private first key and the public first key such that the private first key is used for encrypting data when writing takes place and the public first key is used for decrypting the data when reading takes place.

13. The method of claim 12, wherein the first public key is placed in the at least one access structure when rights for reading data from a field are established.

14. The method of claim 12, wherein the first private key is placed in the at least one access structure when rights for writing data into a field are established.

15. The method of claim 1, further comprising:
during the creation of the cryptocontainer for user's data, adding an access structure for a data access rights manager,
wherein at least one first key for the added access structure of the data access rights manager is placed in the access structure of the user data processor, and wherein the at least one first key is encrypted.

16. The method of claim 15, wherein the placing, in the access structure of the user data processor, the at least one first key for the added access structure of the data access rights manager includes extracting the first key from the access structure of the data access rights manager.

17. The method of claim 1, further comprising:
requesting, on behalf of the user data processor, rights for accessing elements of the user's data in the created cryptocontainer.

18. A system for granting a user data processor access to a cryptocontainer of user data, comprising:
at least one processor configured to:
create a cryptocontainer for user's data, wherein the cryptocontainer receives at least one element of the user's data and encrypts the at least one element;
establish, for the user data processor, rights for accessing the at least one element of the user's data using a first key;
form, for the user data processor, at least one access structure, wherein the forming of the at least one access structure includes:
placing the first key in the at least one access structure based on the established rights;
receiving, from the user data processor, a second key linked to the user data processor which is to be used for accessing the first key; and
encrypting the first key with the second key; and
when a request for access to the cryptocontainer is received, grant, to the user data processor, access to the cyptocontainer based on the formed at least one access structure.
